# EUROPEAN PATENT SPECIFICATION

(11) **EP 1 754 912 B1**
(45) Date of publication and mention of the grant of the patent: **07.10.2009**
(21) Application number: 06016897.8
(22) Date of filing: 12.08.2006
(51) Int. Cl.: F16G 5/18

(54) **Power transmission chain and power transmission device**
Treibkette und Antriebsvorrichtung
Chaîne de transmission et dispositif de transmission

(30) Priority: 18.08.2005 JP 2005237682
(43) Date of publication of application: 21.02.2007
(73) Proprietor: JTEKT CORPORATION, Chuo-ku Osaka-shi Osaka 542-8502 (JP)
(72) Inventor: Tada, Seiji Jtekt Corporation, Osaka-shi Osaka 542-8502 (JP); Kamamoto, Shigeo Jtekt Corporation, Osaka-shi Osaka 542-8502 (JP)
(74) Representative: Steil, Christian

(56) References cited:
- EP-A1- 0 741 255
- WO-A-20/06108378
- DE-C1- 3 740 504
- GB-A- 2 080 477
- JP-A- 1 169 150
- US-A- 4 909 778

## Description

### BACKGROUND OF THE INVENTION

### Field of the Invention

The present invention relates to a power transmission chain and a power transmission device provided with the same. Description of Related Arts

As endless power transmission chains used for power transmission devices such as pulley-type continuously variable transmissions (CVTs) of automobiles, power transmission chains, in which a plurality of links are lined in a chain traveling direction, and the links adjacent in the chain traveling direction are coupled to each other by a pair of pins that are capable of a rolling motion to each other, have been proposed (see the following documents 1 to 3, for example).
Document 1: Japanese Unexamined Patent Publication No. 08-312725
Document 2: Japanese Unexamined Utility Model Publication No. 63-201248
Document 3: Japanese Unexamined Patent Publication No. 01-169150

The power transmission chains are used in a tensioned condition. With bending between the links, opposed surfaces of the pair of pins mainly perform a rolling motion relatively.

In Document 1, the opposed surface of one pin is formed in a circular-arc shape, and the opposed surface of the other pin is formed flat. In Documents 2 and 3, the opposed surface of one pin and the opposed surface of the other pin are respectively formed in circular-arc shapes that are convex with respect to each other.

In any of Documents 1 to 3, the contact area between opposed surfaces of a pair of pins is small. Therefore, a pressing force that a pair of these opposed surfaces affect each other is high, and a large load is locally produced in the pins.

Document GB-A-2 080 477 discloses a power transmission chain, comprising a plurality of links lined in a chain traveling direction, and a plurality of connecting members that connect the plurality of links to each other so as to be bendable, wherein each of the connecting members includes a power transmission member opposed to a predetermined counterpart member, the predetermined counterpart member includes a member interposed between the power transmission member and the corresponding link, the power transmission member and the predetermined counterpart member include opposed portions opposed to each other, the opposed portions of the power transmission member and the predetermined counterpart member contact each other at a contact portion that is displaced as a result of bending between the links in a contact condition including at least either a rolling contact or a sliding contact, the opposed portion of the power transmission member has a convex curve portion, and the opposed portion of the predetermined counterpart member has a concave curve portion to be engaged with the convex curve. Further, the convex and concave curve portions each include a circular arc face.

Document US-A-4,909,778 discloses a link chain formed of elongated links connected transversely by connecting joints which are formed by pairs of connecting joint elements.

Document DE 37 40 504 C1 discloses a chain wherein the links are formed of plastic fibers assembled to endless links.

It is an object of the invention to provide an improved power transmission chain.

The above object is achieved by the power transmission chain of claim 1 and the power transmission chain of claim 3.

In order to achieve the object as described above, a preferred mode of the present invention is provided with a plurality of links lined in a chain traveling direction and a plurality of connecting members that connect the plurality of links to each other so as to be bendable. Each connecting member includes a power transmission member opposed to a predetermined counterpart member. The counterpart member includes either a member interposed between the power transmission member and corresponding link or the corresponding link. The power transmission member and the counterpart member include opposed portions opposed to each other. The opposed portions of the power transmission member and the counterpart member contact each other at a contact portion that is displaced as a result of bending between the links in a contact condition including at least either a rolling contact or a sliding contact. The opposed portion of the power transmission member has a convex curve portion. The opposed portion of the counterpart member has a concave curve portion to be engaged with the convex curve portion.

According to the present mode, by realizing a contact between the power transmission member and the counterpart member by a contact between the convexity and concavity, a large contact area is secured between the power transmission member and the counterpart member. Since a contact pressure of the power transmission member and counterpart member that acts on each other' s contact portions can be lowered, a high load is prevented from being locally produced in the power transmission member and the counterpart member, respectively. Accordingly, durability of the power transmission member and the counterpart member can be improved, and consequently, durability of the power transmission chain can be improved.

### BRIEF DESCRIPTION OF THE DRAWINGS

Fig. 1 is a partiallybroken perspective view schematically showing a main-part configuration of a chain-type continuously variable transmission as being a power transmission device provided with a power transmission chain according to an embodiment of the present invention.
Fig. 2 is a partial enlarged sectional view of a drive pulley (driven pulley) and a chain of Fig. 1.
Fig. 3 is a sectional view of a main part of the chain.
Fig. 4 is a sectional view along a line IV-IV of Fig. 3, showing the chain in a straight area.
Fig. 5 is a side view of the chain in a bending area.
Fig. 6A and Fig. 6B are schematic views of a main part for explaining a chain operation, wherein Fig. 6A shows the chain in the straight area, and Fig. 6B shows the chain in the bending area.
Fig. 7 is a sectional view of a main part of another embodiment of the present invention.
Fig. 8 is a sectional view of a main part of still another embodiment of the present invention.

### DETAILED DESCRIPTION OF THE PREFERRED EMBODIMENT

A preferred embodiment of the present invention will be described in detail with reference to the accompanying drawings.

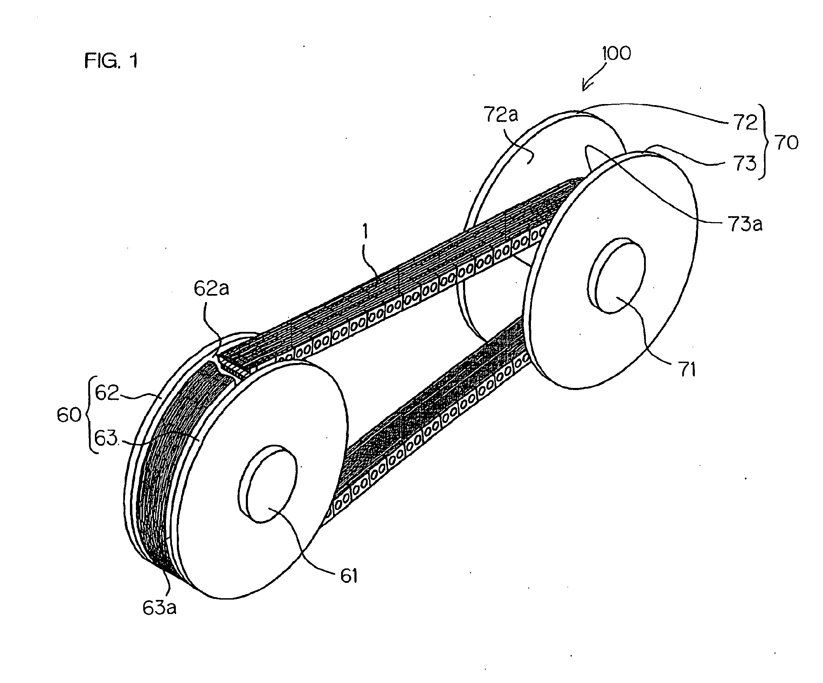

Fig. 1 is a partially broken perspective view schematically showing a main-part configuration of a chain-type continuously variable transmission (hereinafter, simply referred to also as a continuously variable transmission) as being a power transmission device provided with a power transmission chain according to an embodiment of the present invention. Referring to Fig. 1, a continuously variable transmission 100 is mounted on a vehicle of an automobile or the like. The continuously variable transmission 100 is provided with a drive pulley 60 made of a metal (such as structural steel) as being a first pulley, a driven pulley 70 made of a metal (such as structural steel) as being a second pulley, and an endless power transmission chain 1 (hereinafter, simply referred to also as a chain) wound and stretched between both these pulleys 60 and 70. Here, the chain 1 in Fig. 1 is partially shown in section for ease in understanding.

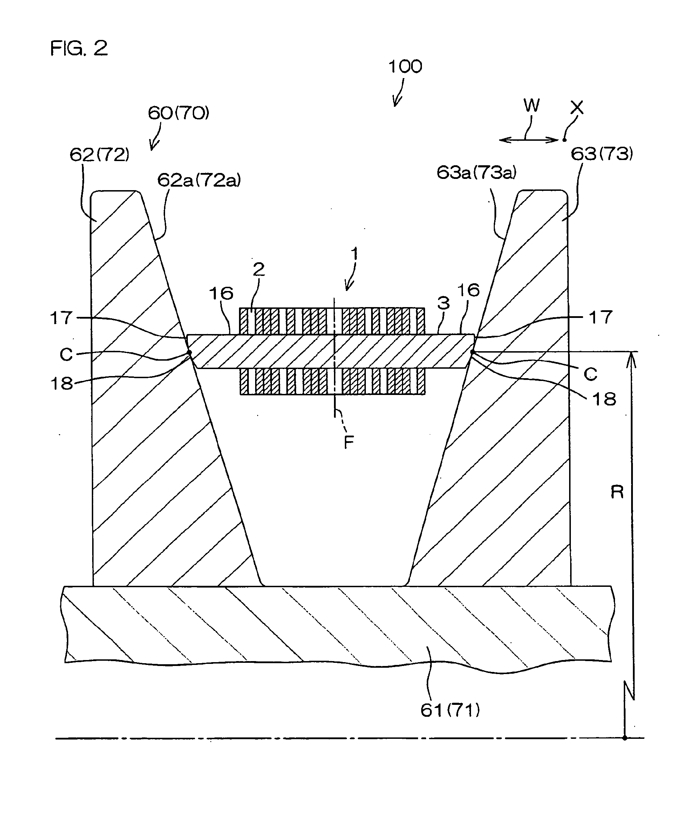

Fig. 2 is a partial enlarged sectional view of the drive pulley 60 (driven pulley 70) and the chain 1 of Fig. 1. The drive pulley 60 and driven pulley 70 comprise of variable diameter pulleys. Referring to Fig. 1 and Fig. 2, the drive pulley 60 is integrally rotatably attached to an input axis 61 that continues to a driving source of the vehicle so that power transmission is possible, and is provided with a stationary sheave 62 and a movable sheave 63. The stationary sheave 62 and the movable sheave 63 have a pair of opposed sheave surfaces 62a and 63a, respectively. Each sheave surface 62a and 63a includes a conical surface-like inclined surface. A groove is defined between these sheave surfaces 62a and 63a, and this groove nips and holds the chain 1 under high pressure.

In addition, the movable sheave 63 is connected with a hydraulic actuator (unillustrated) to change the groove width, so that the groove width is changed by shifting the movable sheave 63 in an axial direction (left and right direction of Fig. 2) of the input axis 61 at the time of speed change. The chain 1 is thereby shifted in a radial direction (up-and-down direction of Fig. 2) of the input axis 61, so that an effective radius Rof the pulley 60 with respect to the chain 1 (hereinafter, referred to also as an effective radius R of the pulley 60) can be changed.

On the other hand, as shown in Fig. 1 and Fig. 2, the driven pulley 70 is integrally rotatably attached to an output axis 71 that continues to a drive wheel (unillustrated) so that power transmission is possible. Similar to the drive pulley 60, the driven pulley 70 is provided with a stationary sheave 73 and a movable sheave 72 having a pair of opposed sheave surfaces 73a and 72a, respectively, for forming a groove to nip the chain 1 under high pressure.

Similar to the movable sheave 63 of the drive pulley 60, the movable sheave 72 of the driven pulley 70 is connected with a hydraulic actuator (unillustrated), so that the groove width is changed by shifting the movable sheave 72 at the time of speed change. The chain 1 is thereby shifted, so that an effective radius R of the pulley 70 with respect to the chain 1 (hereinafter, referred to also as an effective radius R of the pulley 70) can be changed.

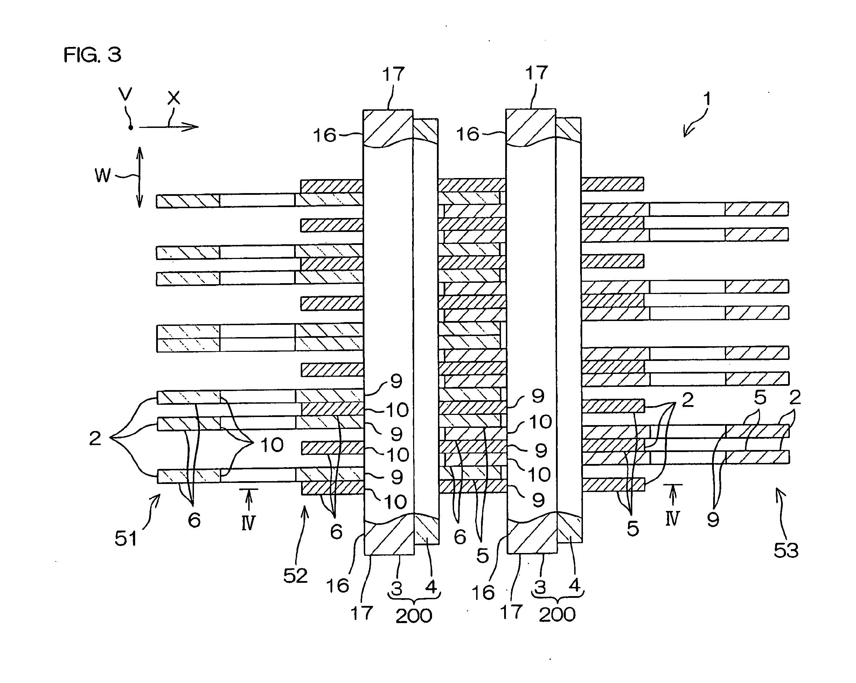

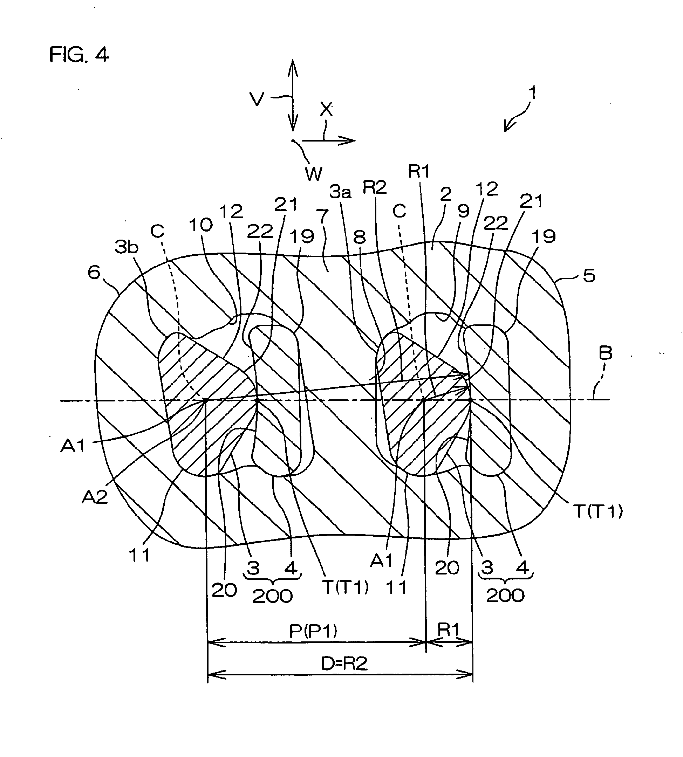

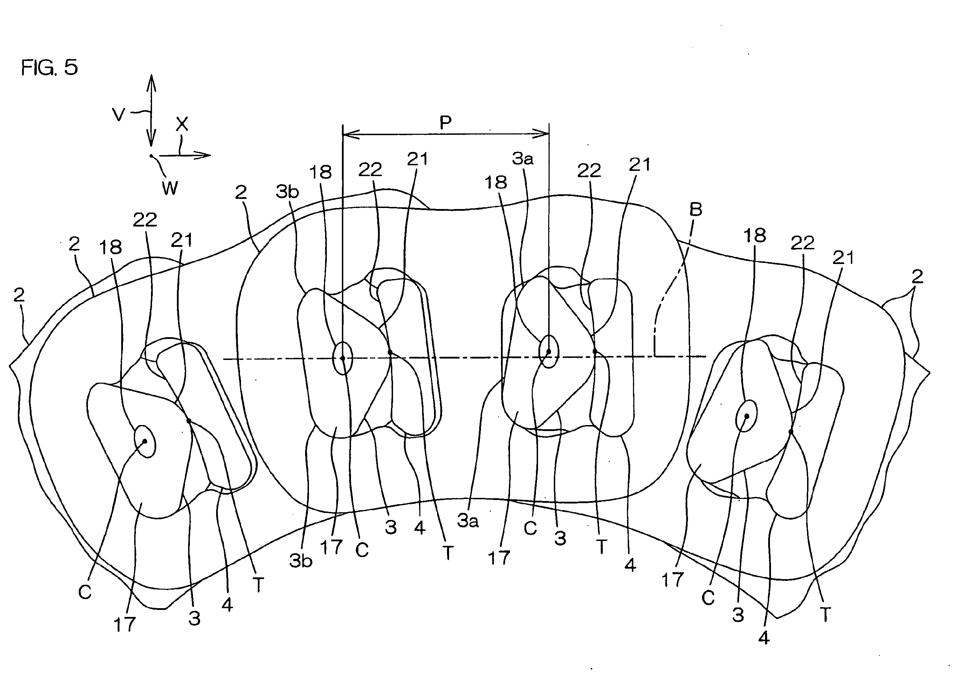

Fig. 3 is a sectional view of a main part of the chain 1. Fig. 4 is a sectional view along a line IV-IV of Fig. 3, showing the chain 1 in a straight area. Fig. 5 is a side view of the chain 1 in a bending area.

Hereinafter, when description is given with reference to Fig. 4, the description will be made on the basis of the chain 1 in the straight area, and when description is given with reference to Fig. 5, the description will be made on the basis of the chain 1 in the bending area.

Referring to Fig. 3 and Fig. 4, the chain 1 is provided with a plurality of links 2 and a plurality of connecting members 200 that couple these links to each other so as to be bendable.

In the following, the direction along a traveling direction of the chain 1 is referred to as a chain traveling direction X, a direction orthogonal to the chain traveling direction X and along a longitudinal direction of the connecting members 200 is referred to as a chain width direction W, and a direction orthogonal to both the chain traveling direction X and the chain width direction W is referred to as an orthogonal direction V.

Each link 2 is formed in a plate shape and includes a front end portion 5 and a rear end portion 6 as being a pair of end portions lined back and forth in the chain traveling direction X and a middle portion 7 arranged between the front end portion 5 and the rear end portion 6.

In the front end portion 5 and the rear end portion 6, a front through-hole 9 as being a first through-hole and a rear through-hole 10 as being a second through-hole are formed, respectively. The middle portion 7 has a pillar portion 8 for partitioning between the front through-hole 9 and the rear through-hole 10. The pillar portion 8 has a predetermined thickness in the chain traveling direction X. In addition, a peripheral portion of each link 2 is formed with smooth curves and is formed in a shape on which stress concentration hardly occurs.

The links 2 are used to form first to third link arrays 51 to 53. Concretely, the first link array 51, the second link array 52, and the third link array 53 include a plurality of the links 2 lined in the chain width direction W, respectively. In each of the first to third link arrays 51 to 53, the links 2 in an identical link array are aligned so that the positions in the chain traveling direction X are the same as each other. The first to third link arrays 51 to 53 are arranged side by side along the chain traveling direction X. The first to third link arrays 51 to 53 form a link module.

The links 2 of the first to third link arrays 51 to 53 are coupled, by use of the corresponding connecting members 200, to the corresponding links 2 of the first to third link arrays 51 to 53 so as to be relatively rotatable (bendable) .

Concretely, the front through-holes 9 of the links 2 of the first link array 51 and the rear through-holes 10 of the links 2 of the second link array 52 correspond to each other while lining up in the chain width direction W. By the connecting members 200 inserted through these through-holes 9 and 10, the links 2 of the first and second link arrays 51 and 52 are coupled to each other so as to be bendable in the chain traveling direction X.

Similarly, the front through-holes 9 of the links 2 of the second link array 52 and the rear through-holes 10 of the links 2 of the third link array 53 correspond to each other while lining up in the chain width direction W. By the connecting members 200 inserted through these through-holes 9 and 10, the links 2 of the second and third link arrays 52 and 53 are coupled to each other so as to be bendable in the chain traveling direction X.

In Fig. 3, although the first to the third link arrays 51 to 53 are illustrated with one each, the first to the third link arrays 51 to 53 are arranged so that these are repeated along the chain traveling direction X. Then, the links 2 of the two links arrays adj acent to each other in the chain traveling direction X are coupled in order by the corresponding connecting members 200, so that the chain 1 in an endless form is formed.

Referring to Fig. 3 and Fig. 4, the respective connecting members 200 are provided with first and second paired pins 3 and 4, respectively. The first and second paired pins 3 and 4 are structured so as to elastically contact and make a rolling contact and/or a sliding contact with each other. Namely, the first and second paired pins 3 and 4 contact each other in a contact condition including at least either the rolling contact or sliding contact.

The first pin 3 is a predetermined long (plate-like) power transmission member extended in the chain width direction W. A circumferential surface 11 of the first pin 3 extends parallel in the chain width direction W. The circumferential surface 11 has a front portion 12 as being an opposed portion facing forward in the chain traveling direction X.

The front portion 12 is formed with smooth curves in a cross-sectional shape thereof, and makes a rolling contact and/or a sliding contact at a contact portion T in a manner opposed to the second pin 4 paired therewith. In the chain 1 in the straight area, a pitch between the contact portions T1 (predetermined portions) of the first pins 3 is equal to an arrangement pitch P1 of the first pins 3 in the straight chain area.

Referring to Fig. 2 and Fig. 3, a pair of end portions 16 with respect to the longitudinal direction (chain width direction W) of the first pin 3 are protruded in the chain width direction W from the links 2 arranged at a pair of end portions in the chain width direction W, respectively. In the pair of these end portions 16, end faces 17 as being a pair of power transmitting portions are provided, respectively. The pair of end faces 17 are opposed to each other with a plane F orthogonal to a center in the chain width direction W sandwiched therebetween, and have shapes symmetrical to each other. These end faces 17 are for making a frictional contact (engagement) with the corresponding sheave surfaces 62a and 63a, 72a and 73a of each pulley 60 and 70.

The first pin 3 is sandwiched between the corresponding sheave surfaces 62a and 63a, 72a and 73a, whereby power is transmitted between the first pin 3 and each pulley 60 and 70. The first pin 3 is formed of, for example, a high-strength abrasion resistant material such as bearing steel (JIS steel SUJ2) since the end faces 17 thereof directly contribute to a power transmission.

Referring to Fig. 2 and Fig. 5, the end face 17 of the first pin 3 is formed in a shape to include a part of a spherical surface, and is curved to be convex to the outside in the chain width direction W. On the end face 17, a contact area 18 is provided. On the end faces 17, the contact areas 18 contact the corresponding sheave surfaces 62a and 63a, 72a and 73a of each pulley 60 and 70.

The contact area 18 forms, for example, an elliptic shape, and has a contact center point C (centroid of the contact area 18) as a predetermined portion. In a view in the chain width direction W, the position of the contact center point C is identical with a centroid of the end face 17. Referring to Fig. 4, an arrangement pitch P of the first pins 3 is equal to a pitch between the contact center points C lined in the chain traveling direction X. The arrangement pitch P is, for example, 8mm.

Referring to Fig. 3 and Fig. 4, the second pin 4 (referred to also as a strip or interpiece) is a long (plate-like) member made of the same material as that of the first pin 3 and extended in the chain width direction W, and is a pairing member interposed between the first pin 3 paired therewith and the corresponding link 2.

The second pin 4 is formed shorter than the first pin 3 so as not to contact the sheave surfaces of each pulley, and is arranged, relative to the first pin 3 paired therewith, forward in the chain traveling direction X. With respect to the chain traveling direction X, the second pin 4 is formed thinner than the first pin 3.

A circumferential surface 19 of the second pin 4 extends in the chain width direction W. The circumferential surface 19 has a rear portion 20 as being an opposed portion facing backward in the chain traveling direction X. The rear portion 20 is opposed to the front portion 12 of the first pin 3 paired therewith in the chain traveling direction X, and makes a rolling contact and/or a sliding contact with the front portion 12 at the contact portion T.

The chain 1 is provided as a so-called press-fit type chain. Concretely, the first pin 3 is loosely fitted into the front through-hole 9 of each link 2 so as to be relatively shiftable, and is also joined by press fitting into the rear through-hole 10 of each link 2 in a manner that a relative shift is restricted. The second pin 4 is joined by press fitting into the front through-hole 9 of each link 2 in a manner that a relative shift is restricted, and is also loosely fitted into the rear through-hole 10 of each link 2 so as to be relatively shiftable.

In other words, the front through-hole 9 of each link 2 is loosely fitted with the first pin 3 so as to be relatively shiftable, and is also joined by press fitting with the second pin 4 paired with the first pin 3 so that a relative shift is restricted. The rear through-hole 10 of each link 2 is joined by press fitting with the first pin 3 so that a relative shift is restricted, and is also loosely fitted with the second pin 4 paired with the first pin 3 so as to be relatively shiftable.

With the structure described above, the front portion 12 of the first pin 3 makes a rolling contact and/or a sliding contact, on the contact portion T that is displaced as a result of bending between the links 2 adjacent in the chain travelling direction X, with the rear portion 20 of the second pin 4 paired therewith.

The present embodiment is mainly characterized in the following. Namely, a convex curve portion 21 is provided in the front portion 12 of the first pin 3, and a concave curve portion 22 is provided in the rear portion 20 of the second pin 4. By engaging the convex curve portion 21 and the concave curve portion 22 together, a large contact area is secured between these first and second pins 3 and 4, whereby a contact pressure produced between both 3 and 4 is reduced.

The convex curve portion 21 includes a circular-arc face provided in the central part of the front portion 12 of the first pin 3 with respect to the orthogonal direction V, and is protruded to the side of the concave curve portion 22 of the second pin 4 paired therewith. When the chain 1 in a straight area is viewed along the chain width direction W, the position of a center of curvature A1 of the convex curve portion 21 is identical with the position of the contact center point C, and the position of the center of curvature A1 of the convex curve portion 21 is aligned with the position of the contact portion T1 with respect to the orthogonal direction V.

The center of curvature A1 of the convex curve portion 21 and the contact portion T1 are lined on a predetermined straight line B parallel in the chain traveling direction X. This straight line B is a straight line that connects the contact portions T1 in the straight area. A radius of curvature R1 of the convex curve portion 21 is provided as, for example, approximately 1 to 30mm (in the present embodiment, 3mm).

The concave curve portion 22 includes a circular-arc face provided in the central part of the rear portion 19 of the second pin 4 with respect to the orthogonal direction V, and is depressed so as to be engaged with the convex curve portion 21 of the first pin 3 paired therewith. When the chain 1 in the straight area is viewed in the chain width direction W, the position of a center of curvature A2 of the concave curve portion 22 is aligned with the position of the contact portion T1 with respect to the orthogonal direction V. Thereby, the center of curvature A2 of the concave curve portion 22 and the center of curvature A1 of the convex curve portion 21 are lined on the straight line B.

The position of the center of curvature A2 of the concave curve portion 22 is identical with the position of the center of curvature A1 (contact center point C) of the convex curve portion 21 of a first pin 3b adjacent backward in the chain travelling direction X to the first pin 3a that contacts the concave curve portion 22. Thereby, the concave curve portion 22 of the second pin 4 is made concentric with the convex curve portion 21 of the first pin 3b.

A radius of curvature R2 of the concave curve portion 22 is provided equal to or more than a sum total D (R2≥D) of the arrangement pitch P1 in the straight chain area and the radius of curvature R1 of the convex curve portion 21 (in the present embodiment, R2=D=11mm).

If the radius of curvature R2 of the concave curve portion 22 is less than the sum total D, a part of the concave curve portion 22 (for example, a middle portion of the concave curve portion 22 with respect to the orthogonal direction V) fails to engage with the convex curve portion 21, and it becomes difficult to achieve a smooth contact between the concave curve portion 22 and convex curve portion 21. Therefore, the radius of curvature R2 of the concave curve portion 22 is provided equal to or more than the sum total D.

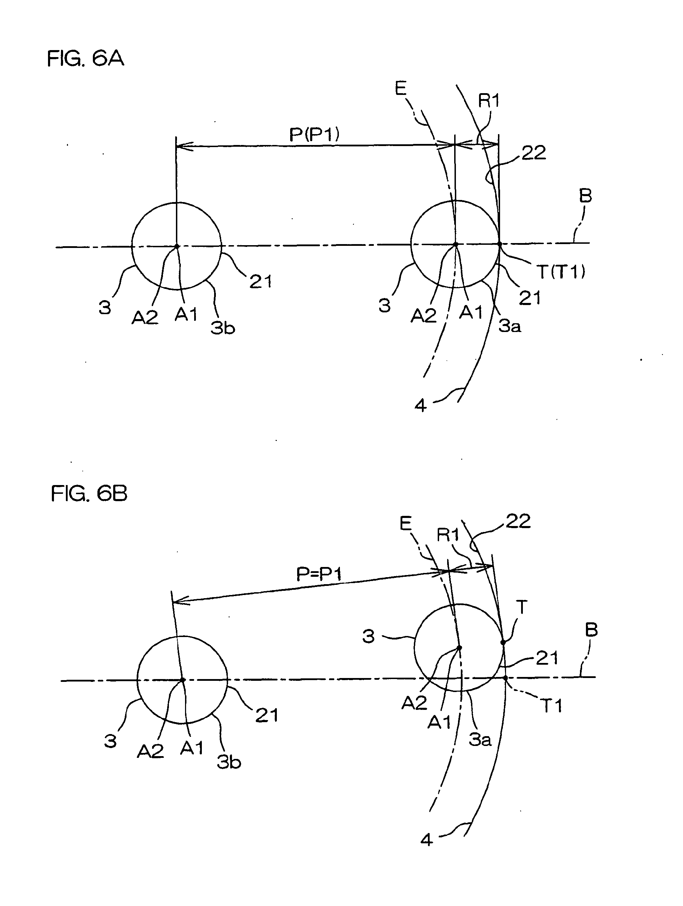

In a continuously variable transmission with the schematic structure of the above, the chain 1 operates as follows. Namely, the chain 1 in the straight area is in, as shown in Fig. 4 and Fig. 6A, a condition where the center of curvature A1 of the convex curve portion 21, the center of curvature A2 of the concave curve portion 22, and the contact portion T1 are lined on the straight line B.

When the chain 1 in the straight area transits to a bending area, as shown in Fig. 5 and Fig. 6B, the first and second pins 3a and 4 make a rolling contact and/or a sliding contact at the contact portion T between the convex curve portion 21 and concave curve portion 22 as a result of bending between the links 2.

At this time, a movement locus E of the center of curvature A1 of the convex curve portion 21 of the first pin 3a forms a circular-arc shape around the center of curvature A1 of the convex curve portion 21 of the first pin 3b adjacent to the first pin 3a at the back of the chain. The arrangement pitch P does not change from the arrangement pitch P1 in the straight area of the chain 1. In addition, as long as the amount of relative change in bending angle between the links 2 is the same, the amount of displacement in the contact portion T on the concave curve portion 22 is the same irrespective of the value of the bending angle.

As has been described above, according to the present embodiment, by realizing a contact between the first pin 3 and the second pin 4 as a contact between the convexity and concavity (contact between the convex curve portion 21 and the concave curve portion 22), a large contact area is secured between the first pin 3 and the second pin 4. Thereby, a contact pressure of the first pin 3 and the second pin 4 that acts on the respective contact portions T can be lowered, and a high load is prevented from being locally produced in the first pin 3 and the second pin 4, respectively. Accordingly, durability of the first pin 3 and the second pin 4 can be improved, so that durability of the chain 1 can be improved.

In addition, since the circular-arc faces are provided on the convex curve portion 21 and the concave curve portion 22, respectively, a rolling contact and/or a sliding contact between the convex curve portion 21 and the concave curve portion 22 can be made more smoothly.

Furthermore, the radius of curvature R2 of the concave curve portion 22 is provided equal to or more than the sum total D of the arrangement pitch P1 of the first pins 3 in the straight chain area and the radius of curvature R1 of the convex curve portion 21. The radius of curvature R2 of the concave curve portion 22 is provided sufficiently large so as to moderate curvature of the concave curve portion 22. Thereby, a range of the concave curve portion 22 that can be engaged with the convex curve portion 21 can be provided as the entire surface of the concave curve portion 22, and consequently, a rolling contact between the concave curve portion 22 and the convex curve portion 21 can be made more smoothly.

If the radius of curvature R2 of the concave curve portion 22 is less than the sum total D, curvature of the concave curve portion 22 is sharp. Therefore, the concave curve portion 22 has an area that cannot be engaged with the convex curve portion 21, and consequently, a rolling contact and the like between the concave curve portion 22 and the convex curve portion 21 is no longer smooth.

In addition, the contact center point C, the center of curvature A1 of the convex curve portion 21, and the center of curvature A2 of the concave curve portion 22 (adj acent forward in the chain traveling direction X to the concave curve portion 22 that contacts the convex curve portion 21) are made so as to overlap with each other when the chain 1 is viewed in the chain width direction W, and the radius of curvature R2 of the concave curve portion 22 is made equal to the sum total D (R2=D) . Thereby, irrespective of the relative position of the concave curve portion 22 and the convex curve portion 21 opposed to each other, namely, irrespective of the size of the bending angle between the links 2, the arrangement pitch P can be maintained at a fixed value.

Accordingly, the overall length (equal to the overall length of a straight line that connects the respective contact center points C in the chain traveling direction X) of the chain 1 never changes. This prevents an unexpected fluctuation in the effective radius R of each pulley 60 and 70 with respect to the chain 1, and consequently, misalignment (deflection) of the pulleys 60 and 70 in the axial direction can be reduced.

In addition, the centers of curvature A1 of the respective convex curve portions 21 and the centers of curvature A2 of the respective concave curve portions 22 are arranged on the identical straight line B when the power transmission chain 1 in the straight area is viewed in the chain width direction W. Thereby, when the chain 1 in the straight area transmits to the bending area, occurrence of slippage between the convex curve portion 21 and the concave curve portion 22 can be prevented, and consequently, a rolling contact between the both can be made more smoothly.

Furthermore, the first pin 3 is loosely fitted into the front through-hole 9 of each link 2 and is also joined by press fitting into the rear through-hole 10 of each link 2, and the second pin 4 is joined by press fitting into the front through-hole 9 of each link 2 and is also loosely fitted into the rear through-hole 10 of each link 2.

Therefore, when the respective end faces 17 of the respective first pins 3 contact the corresponding sheave surfaces 62a, 63a, 72a, and 73a of the respective pulleys 60 and 70, the second pins 4 paired therewith make a rolling contact and/or sliding contact with the first pins 3, whereby bending between the links 2 is made possible.

At this time, between the first and second paired pins 3 and 4, a rolling contact component with each other is large while a sliding contact component is very small. Consequently, the respective end faces 17 of the first pins 3 contact the corresponding sheave surfaces 62a, 63a, 72a, and 73a with little rotation, and friction loss can therefore be reduced to secure a high transmission efficiency.

In this manner, the continuously variable transmission 100 excellent in durability and transmission efficiency can be realized.

In the present embodiment, the convex curve portions 21 may have a plurality of types of radiuses of curvature different from each other. In addition, the concave curve portions 22 may have a plurality of types of radiuses of curvature different from each other.

Furthermore, a plurality of types of arrangement pitches with different values may be provided and randomly disposed in the chain traveling direction X. In this case, being "random" means that at least either periodicity or regularity is irregular.

In addition, the front through-hole 9 and the rear through-hole 10 of the link 2 may be switched with each other in arrangement. Furthermore, a communicating groove that communicates the front through-hole 9 and rear through-hole 10 with each other may be provided in the pillar portion 8 of the link 2. The width of the communicating groove with respect to a direction orthogonal to the communicating direction of the communicating groove may be smaller than the inside diameters of the respective through-holes 9 and 10 or may be increased to the same extent. When the width of the communicating groove is relatively small, rigidity of the link 2 increases. When the width of the communicating groove is relatively large conversely, the amount of elastic deformation (flexibility) of the link 2 increases, and as a result, the stress produced in the link 2 can further be reduced. The width of the communicating groove can be appropriately set according to a load condition.

In addition, the first pin 3 may be loosely fitted into the rear through-hole 10 of each link 2 so as to be relatively shiftable. Furthermore, the second pin 4 may be loosely fitted into the front through-hole 9 of each link 2 so as to be relatively shiftable. In addition, the second pin 4 may be engaged with the respective pulleys 60 and 70.

Furthermore, by providing members having power transmitting faces similar to the end faces 17 of the first pin 3 in the vicinities of the pair of end portions 16 of the first pin 3, respectively, a power transmission block including the first pin 3 and a member having the power transmitting faces may be provided, and this may be provided as a predetermined power transmission member.

Although the end face 17 of the first pin 3 has been formed in a shape to include a part of a spherical surface, the end face of the first pin may be formed in a trapezoidal shape so that a contact portion between the end face of the first pin and the sheave surface of the pulley becomes a plane. In this case, a contact pressure of the end face of the first pin and sheave surface onto each other's contact portions is reduced, and durability is improved.

In addition, the invention is not limited to a mode in which the groove widths of both the drive pulley 60 and the driven pulley 70 fluctuate, and it may be a mode in which only one of the groove widths fluctuates and the other does not fluctuate with a fixed width. Furthermore, a description has been given of a mode in which the groove widths fluctuate continuously (without steps) in the above, however, the invention may be applied to other power transmission devices in such a mode that the groove widths fluctuate stepwise or are fixed (non-variable speed).

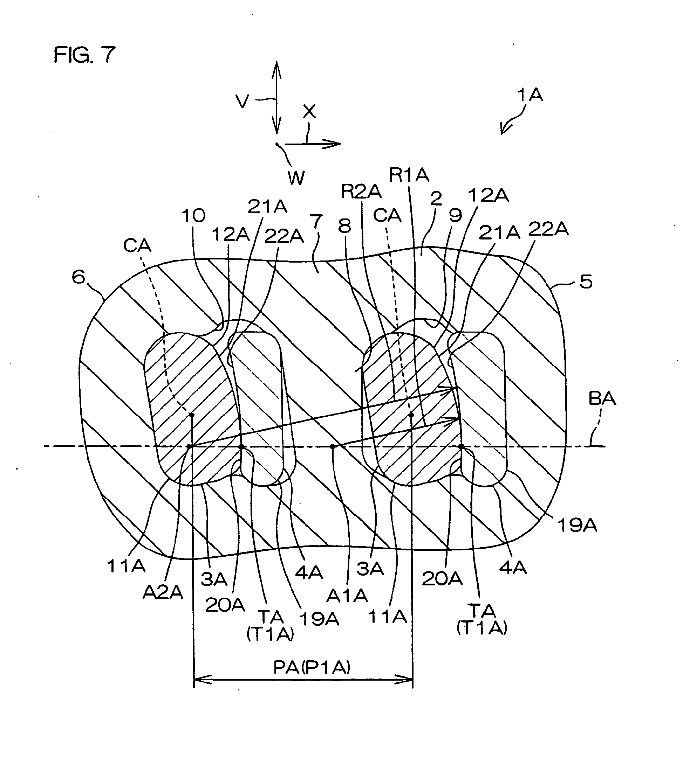

Fig. 7 is a sectional view of a main part of another embodiment of the present invention. In the present embodiment, description will be given mainly of a point different from the embodiment shown in Fig. 1 to Fig. 6, and the same components will be denoted by the same numeral references in the figure so as to omit descriptions thereof.

Referring to Fig. 7, in the present embodiment, a point mainly different from the embodiment shown in Fig. 1 to Fig. 6 is that a center of curvature A1A of a convex curve portion 21A, a center of curvature A2A of a concave curve portion 22A, and a contact portion T1A are arranged with an offset with respect to a contact center point CA when a chain 1A in a straight area is viewed in the chain width direction W.

The center of curvature A1A of the convex curve portion 21A, the center of curvature A2A of the concave curve portion 22A, and the contact portion T1A are arranged on a straight line BA in the chain traveling direction X. The straight line BA is offset to one side in the orthogonal direction V (in the present embodiment, inside diameter side of the chain) with respect to the contact center point CA.

The center of curvature A1A of the convex curve portion 21A is offset backward in the chain traveling direction X with respect to the contact center point CA of a first pin 3A provided with the convex curve portion 21A.

The center of curvature A2A of the convex curve portion 22A of the second pin 4A which is inserted into the front through-hole 9 is offset backward in the chain traveling direction X with respect to the contact center point CA of the first pin 3A which is inserted into the rear through-hole 10.

According to the present embodiment, since the position of the contact portion T1A in the straight area can be approximated further to the inside diameter side of the chain, a greater allowable bending angle (maximum bending angle) of the chain 1A can be secured.

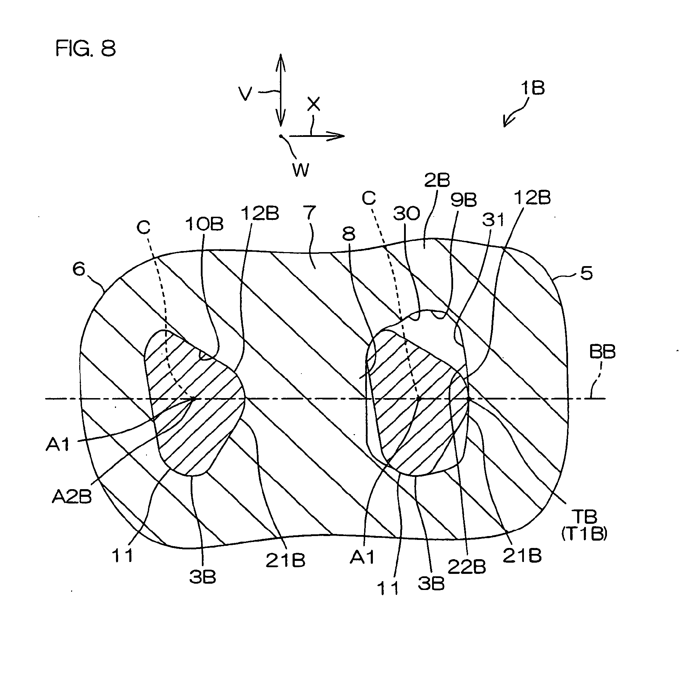

Fig. 8 is a sectional view of a main part of still another embodiment of the present invention. In the present embodiment, description will be given mainly of a point different from the embodiment shown in Fig. 1 to Fig. 6, and the same components will be denoted by the same numeral references in the figure so as to omit descriptions thereof.

Referring to Fig. 8, the present embodiment is characterized in that links 2B adjacent in the chain traveling direction X are coupled to each other so as to be relatively rotatable (so as to be bendable) by one (single) first pin 3B. Concretely, a front through-hole 9B of each link 2B is loosely fitted with the corresponding first pin 3B so as to be relatively shiftable, and a rear through-hole 10B of each link 2B is joined by press fitting with the corresponding first pin 3B so that a relative shift is restricted.

A front portion 31 (opposed portion) of a peripheral portion 30 of the front through-hole 9B with respect to the chain traveling direction X has a concave curve portion 22B, and the concave curve portion 22B makes a rolling contact and/or a sliding contact at a contact portion TB in a manner opposed to a convex curve portion 21B of a front portion 12B of the first pin 3B loosely fitted into the front through-hole 9B. Thereby, the link 2B as being a counterpart member and the first pin 3B loosely fitted into the link 2B are opposed to each other as a result of bending between the links 2B so as to make a rolling contact and/or a sliding contact.

According to the present embodiment, by making the arrangement pitch between the first pins 3B shorter, the number of the first pins 3B simultaneously caught into the respective pulleys can be made greater. Thereby, a load on each one of the first pins 3B can be reduced so as to reduce the impact force against the respective pulleys, and as a result, noise can be reduced and durability can further be improved.

Here, in the present embodiment, a center of curvature A1 of the convex curve portion 21B and a center of curvature A2B of the concave curve portion 22B may be arranged with an offset in at least either the chain traveling direction X or orthogonal direction V with respect to a contact center point C when a chain 1B in a straight area is viewed along the chain width direction W. In addition, a contact portion T1B may be arranged with an offset with respect to the contact center point C in the orthogonal direction V.

As in the above, although the present invention has been described in detail by concrete modes, a person skilled in the art who has understood the above-described contents will easily conceive modifications, alterations, and equivalents thereof. Accordingly, the present invention should have a scope of claims.

## Claims

1. A power transmission chain (1; 1A; 1B), comprising:
a plurality of links (2; 2B) lined in a chain traveling direction (X); and
a plurality of connecting members (3, 4; 3A, 4A) that connect the plurality of links (2; 2B) to each other so as to be bendable, wherein
each of the connecting members (3, 4; 3A, 4A; 3B) includes a power transmission member (3; 3A; 3B) opposed to a predetermined counterpart member (4; 4A; 2B),
the predetermined counterpart member (4; 4A; 2B) includes either a member (4; 4A) interposed between the power transmission member (3; 3A; 3B) and the corresponding link (2; 2B) or the corresponding link (2B),
the power transmission member (3; 3A; 3B) and the predetermined counterpart member (4; 4A; 2B) include opposed portions (12, 20; 12A, 20A; 12B, 31) opposed to each other,
the opposed portions (12, 20; 12A, 20A; 12B, 31) of the power transmission member (3; 3A; 3B) and the predetermined counterpart member (4; 4A; 2B) contact each other at a contact portion (T; TA; TB) that is displaced as a result of bending between the links (2; 2B) in a contact condition including at least either a rolling contact or a sliding contact,
the opposed portion (12; 12 A; 12B) of the power transmission member (3; 3A; 3B) has a convex curve portion (21; 21A; 21B), and
the opposed portion (20; 20A; 20B) of the predetermined counterpart member (4; 4A; 2B) has a concave curve portion (22; 22A; 22B) to be engaged with the convex curve portion (21; 21A; 21B),
wherein the convex curve portion (21; 21A; 21B) includes a circular-arc face and the concave curve portion (22; 22A; 22B) includes a circular-arc face,
and wherein a radius of curvature (R2; R2A) of the concave curve portion (22; 22A; 22B) is equal to or more than a sum (D) of an arrangement pitch (P1; P1A) of the power transmission members (3; 3A; 3B) with respect to the chain traveling direction (X) in a straight area of the power transmission chain (1; 1A; 1B) and a radius of curvature (R1; R1A) of the convex curve portion (21; 21A; 21B).

2. The power transmission chain (1; 1A; 1B) according to Claim 1, wherein
when the straight area of the power transmission chain (1; 1A; 1B) is viewed in a chain width direction (W) orthogonal to the chain traveling direction (X), a center of curvature (A1; A1A) of each of the convex curve portions (21; 21A; 21B) and a center of curvature (A2; A2A; A2B) of each of the concave curve portions (22; 22A; 22B) are arranged on an identical straight line.

3. A power transmission chain (1A), comprising:
a plurality of links (2) lined in a chain traveling direction (X); and
a plurality of connecting members (3A, 4A) that connect the plurality of links (2) to each other so as to be bendable, wherein
each of the connecting members (3A, 4A) includes a power transmission member (3A) opposed to a predetermined counterpart member (4A), the power transmission member (3A) having a pair of end portions (16) with respect to a chain width direction (W), the end portions (16) having end faces (17) on which a frictional contact with corresponding sheave surfaces can be made, each end face (17) having a contact area (18) with a contact center point (CA),
the predetermined counterpart member (4A) includes either a member (4A) interposed between the power transmission member (3A) and the corresponding link (2) or the corresponding link (2),
the power transmission member (3A) and the predetermined counterpart member (4A) include opposed portions (12A, 20A) opposed to each other,
the opposed portions (12A, 20A) of the power transmission member (3A) and the predetermined counterpart member (4A) contact each other at a contact portion (TA) that is displaced as a result of bending between the links (2) in a contact condition including at least either a rolling contact or a sliding contact,
the opposed portion (12 A) of the power transmission member (3A) has a convex curve portion (21A), and
the opposed portion (20A) of the predetermined counterpart member (4A) has a concave curve portion (22A) to be engaged with the convex curve portion (21A),
wherein when the straight area of the power transmission chain (1A) is viewed in a chain width direction (W) orthogonal to the chain traveling direction (X), a center of curvature (A1A) of each of the convex curve portions (21A) and a center of curvature (A2A) of each of the concave curve portions (22A) are arranged on an identical straight line (BA),
wherein the straight line (BA) on which the center of curvature (A1A) of the convex curve portion (21A) and the center of curvature (A2A) of the concave curve portion (22A) are arranged is offset with respect to the contact center point (CA) to an inside diameter side of the chain in an orthogonal direction (V) orthogonal to both the chain traveling direction (X) and the chain width direction (W).

4. A power transmission device (100), comprising the power transmission chain (1; 1A; 1B) according to any one of Claims 1 to 3.

## Patentansprüche

1. Kraftübertragungskette (1; 1A; 1B) mit:
einer Mehrzahl von Gliedern (2; 2B), die in einer Kettenlaufrichtung (X) aufgereiht sind; und
einer Mehrzahl von Verbindungselementen (3, 4; 3A, 4A), die die Mehrzahl von Gliedern (2; 2B) so miteinander verbinden, dass sie biegbar sind, wobei
jedes der Verbindungselemente (3, 4; 3A, 4A; 3B) ein Kraftübertragungselement (3; 3A; 3B) gegenüberliegend zu einem bestimmten Gegenelement (4; 4A; 2B) aufweist,
das bestimmte Gegenelement (4; 4A; 2B) entweder ein Element (4; 4A), das zwischen dem Kraftübertragungselement (3; 3A; 3B) und dem entsprechenden Glied (2; 2B) angeordnet ist, oder das entsprechende Glied (2B) aufweist,
das Kraftübertragungselement (3; 3A; 3B) und das bestimmte Gegenelement (4; 4A; 2B) gegenüberliegende Abschnitte (12, 20; 12A, 20A; 12B, 31) aufweisen, die einander gegenüberliegen,
die gegenüberliegenden Abschnitte (12, 20; 12A, 20A; 12B, 31) des Kraftübertragungselements (3; 3A; 3B) und des bestimmten Gegenelements (4; 4A; 2B) einander in einem Berührungsabschnitt (T; TA; TB) berühren, der als Ergebnis eines Biegens zwischen den Gliedern (2; 2B) unter einer Berührungsbedingung versetzt ist, die zumindest entweder eine Rollberührung oder eine Gleitberührung aufweist,
der gegenüberliegende Abschnitt (12; 12A; 12B) des Kraftübertragungselements (3; 3A; 3B) einen konvexen Krümmungsabschnitt (21; 21A; 21B) aufweist, und
der gegenüberliegende Abschnitt (20; 20A; 20B) des bestimmten Gegenelements (4; 4A; 2B) einen konkaven Krümmungsabschnitt (22; 22A; 22B) zum Eingreifen mit dem konvexen Krümmungsabschnitt (21; 21A; 21B) aufweist,
wobei der konvexe Krümmungsabschnitt (21; 21A; 21B) eine Kreisbogenfläche aufweist und der konkave Krümmungsabschnitt (22; 22A; 22B) eine Kreisbogenfläche aufweist,
und wobei ein Krümmungsradius (R2; R2A) des konkaven Krümmungsabschnitts (22; 22A; 22B) gleich oder größer ist als eine Summe (D) eines Abstandsmaßes (P1; P1A) der Kraftübertragungselemente (3; 3A; 3B) in Bezug auf die Kettenlaufrichtung (X), und zwar in einem geraden Bereich der Kraftübertragungskette (1; 1A; 1B), und eines Krümmungsradius (R1; R1A) des konvexen Krümmungsabschnitts (21; 21A; 21B).

2. Kraftübertragungskette (1; 1A; 1B) nach Anspruch 1, wobei
wenn der gerade Bereich der Kraftübertragungskette (1; 1A; 1B) in einer Kettenbreitenrichtung (W), die orthogonal zu der Kettenlaufrichtung (X) ist, betrachtet wird, ein Krümmungsmittelpunkt (A1; A1A) von jedem der konvexen Krümmungsabschnitte (21; 21A; 21B) und ein Krümmungsmittelpunkt (A2; A2A; A2B) von jedem der konkaven Krümmungsabschnitte (22; 22A; 22B) auf einer identischen geraden Linie angeordnet sind.

3. Kraftübertragungskette (1A) mit:
einer Mehrzahl von Gliedern (2), die in einer Kettenlaufrichtung (X) aufgereiht sind; und
einer Mehrzahl von Verbindungselementen (3A, 4A), die die Mehrzahl von Gliedern (2) so miteinander verbinden, dass sie biegbar sind, wobei
jedes der Verbindungselemente (3A, 4A) ein Kraftübertragungselement (3A) gegenüberliegend zu einem bestimmten Gegenelement (4A) aufweist, wobei das Kraftübertragungselement (3A) ein Paar von Endabschnitten (16) in Bezug auf eine Kettenbreitenrichtung (W) aufweist, wobei die Endabschnitte (16) Endflächen (17) aufweisen, auf denen ein Reibkontakt mit entsprechenden Laufrollenoberflächen hergestellt werden kann, wobei jede Endfläche (17) einen Kontaktbereich (18) mit einem Kontaktmittelpunkt (CA) aufweist,
das bestimmte Gegenelement (4A) entweder ein Element (4A), das zwischen dem Kraftübertragungselement (3A) und dem entsprechenden Glied (2) angeordnet ist, oder das entsprechende Glied (2) aufweist,
das Kraftübertragungselement (3A) und das bestimmte Gegenelement (4A) gegenüberliegende Abschnitte (12A, 20A) aufweisen, die einander gegenüberliegen,
die gegenüberliegenden Abschnitte (12A, 20A) des Kraftübertragungselements (3A) und des bestimmten Gegenelements (4A) einander in einem Berührungsabschnitt (TA) berühren, der als Ergebnis eines Biegens zwischen den Gliedern (2) unter einer Berührungsbedingung versetzt ist, die zumindest entweder eine Rollberührung oder eine Gleitberührung aufweist,
der gegenüberliegende Abschnitt (12A) des Kraftübertragungselements (3A) einen konvexen Krümmungsabschnitt (21A) aufweist, und
der gegenüberliegende Abschnitt (20A) des bestimmten Gegenelements (4A) einen konkaven Krümmungsabschnitt (22A) zum Eingreifen mit dem konvexen Krümmungsabschnitt (21A) aufweist,
wobei, wenn der gerade Bereich der Kraftübertragungskette (1A) in einer Kettenbreitenrichtung (W), die orthogonal zu der Kettenlaufrichtung (X) ist, betrachtet wird, ein Krümmungsmittelpunkt (A1A) von jedem der konvexen Krümmungsabschnitte (21A) und ein Krümmungsmittelpunkt (A2A) von jedem der konkaven Krümmungsabschnitte (22A) auf einer identischen geraden Linie (BA) angeordnet sind,
wobei die gerade Linie (BA), auf der der Krümmungsmittelpunkt (A1A) des konvexen Krümmungsabschnitts (21A) und der Krümmungsmittelpunkt (A2A) des konkaven Krümmungsabschnitts (22A) angeordnet sind, in Bezug auf den Berührungsmittelpunkt (CA) in Richtung einer Innendurchmesserseite der Kette in einer orthogonalen Richtung (V) versetzt ist, die orthogonal zu sowohl der Kettenlaufrichtung (X) als auch der Kettenbreitenrichtung (W) ist.

4. Kraftübertragungsvorrichtung (100) mit der Kraftübertragungskette (1; 1A; 1B) nach einem der Ansprüche 1 bis 3.

## Revendications

1. Chaîne de transmission de puissance (1 ; 1A ; 1B), comprenant :
une pluralité de liens (2 ; 2B) alignés dans une direction de déplacement de chaîne (X) ; et
une pluralité de membres de connexion (3, 4 ; 3A, 4A), qui connectent la pluralité de liens (2 ; 2B) les uns aux autres de sorte à être déformables, dans laquelle
chacun des membres de connexion (3, 4 ; 3A, 4A ; 3B) inclut un membre de transmission de puissance (3 ; 3A ; 3B) qui est opposé à un membre de contrepartie ou de pendant prédéterminé (4 ; 4A ; 2B),
le membre de contrepartie ou de pendant prédéterminé (4 ; 4A ; 2B) inclut soit un membre (4 ; 4A) interposé entre le membre de transmission de puissance (3 ; 3A ; 3B) et le lien correspondant (2 ; 2B), soit le lien correspondant (2B),
le membre de transmission de puissance (3 ; 3A ; 3B) et le membre de contrepartie ou de pendant prédéterminé (4 ; 4A ; 2B) incluent des portions opposées (12, 20 ; 12A, 20A ; 12B, 31), opposées les unes aux autres,
les portions opposées (12, 20 ; 12A, 20A ; 12B, 31) du membre de transmission de puissance (3 ; 3A ; 3B) et du membre de contrepartie ou de pendant prédéterminé (4 ; 4A ; 2B) sont au contact l'une de l'autre au niveau d'une portion de contact (T ; TA ; TB), qui est déplacée en conséquence d'une déformation entre les liens (2 ; 2B) dans un état de contact incluant au moins soit un contact roulant, soit un contact glissant,
la portion opposée (12 ; 12A ; 12B) du membre de transmission de puissance (3 ; 3A ; 3B) possède une portion de courbe convexe (21 ; 21A ; 21B), et
la portion opposée (20 ; 20A ; 20B) du membre de contrepartie ou de pendant prédéterminé (4 ; 4A ; 2B) possède une portion de courbe concave (22 ; 22A ; 22B) apte à engager la portion de courbe convexe (21 ; 21 A ; 21B),
où la portion de courbe convexe (21 ; 21A ; 21B) inclut une paroi ou une face à arc circulaire et la portion de courbe concave (22 ; 22A ; 22B) inclut une paroi à arc circulaire,
et où un rayon de courbure (R2 ; R 2A) de la portion de courbe concave (22 ; 22A ; 22B) est égal ou supérieur à une somme (D) d'un pas d'ordonnancement (P1 ; P1A) des membres de transmission de puissance (3 ; 3A ; 3B) par rapport à la direction de déplacement de chaîne (X) dans une zone droite de la chaîne de transmission de puissance (1 ; 1A ; 1B) et d'un rayon de courbure (R1 ; R1A) de la portion de courbe convexe (21 ; 21A ; 21B).

2. Chaîne de transmission de puissance (1 ; 1A ; 1B) selon la revendication 1, dans laquelle
lorsque la zone droite de la chaîne de transmission de puissance (1 ; 1A ; 1B) est observée suivant une direction de largeur de chaîne (W) orthogonale à la direction de suivi de chaîne (X), un centre de courbure (A1 ; A1A) de chacune des portions de courbe convexes (21 ; 21 A ; 21B) et un centre de courbure (A2 ; A2A ; A2B) de chacune des portions de courbe concaves (22 ; 22A ; 22B) sont disposés sur une ligne droite identique.

3. Chaîne de transmission de puissance (1A), comprenant :
une pluralité de liens (2) alignés selon une direction de déplacement de chaîne (X) ; et
une pluralité de membres de connexion (3A, 4A), qui connectent la pluralité de liens (2) les uns aux autres de sorte à être déformables, dans laquelle
chacun des membres de connexion (3A, 4A) inclut un membre de transmission de puissance (3A) qui est opposé à un membre de contrepartie ou de pendant prédéterminé (4A), le membre de transmission de puissance (3A) possédant une paire de portions d'extrémité (16) par rapport à une direction de largeur de chaîne (W), les portions d'extrémité (16) possédant des parois d'extrémité (17) sur lesquelles un contact frictionnel peut être réalisé avec des surfaces de poulie correspondantes, chaque paroi d'extrémité (17) possédant une zone de contact (18) avec un point central de contact (CA),
le membre de contrepartie ou de pendant prédéterminé (4A) inclut soit un membre (4A) interposé entre le membre de transmission de puissance (3A) et le lien correspondant (2), soit le lien correspondant (2),
le membre de transmission de puissance (3A) et le membre de contrepartie ou de pendant prédéterminé (4A) incluent des portions opposées (12A, 20A), opposées les unes aux autres,
les portions opposées (12A, 20A) du membre de transmission de puissance (3A) et du membre de contrepartie ou de pendant prédéterminé (4A) sont au contact l'une de l'autre au niveau d'une portion de contact (TA), qui est déplacée en conséquence d'une déformation entre les liens (2) dans un état de contact incluant au moins soit un contact roulant, soit un contact glissant,
la portion opposée (12A) du membre de transmission de puissance (3A) possède une portion de courbe convexe (21 A), et
la portion opposée (20A) du membre de contrepartie ou de pendant prédéterminé (4A) possède une portion de courbe concave (22A) apte à engager la portion de courbe convexe (2 1 A),
où, lorsque la zone droite de la chaîne de transmission de puissance (1A) est observée suivant une direction de largeur de chaîne (W), orthogonale à la direction de déplacement de chaîne (X), un centre de courbure (A1A) de chacune des portions de courbe convexes (21A) et un centre de courbure (A2A) de chacune des portions de courbe concaves (22A) sont disposés sur une ligne droite identique (BA),
dans laquelle la ligne droite identique (BA), sur laquelle le centre de courbure (A1A) de la portion de courbe convexe (21A) et le centre de courbure (A2A) de la portion de courbe concave (22A) sont disposés, est décalée par rapport au point central de contact (CA) sur un côté de diamètre interne de la chaîne selon une direction orthogonale (V), orthogonale à la fois à la direction de déplacement de chaînée (X) et à la direction de largeur de chaîne (W).

4. Dispositif de transmission de puissance (100), comprenant la chaîne de transmission de puissance (1 ; 1A ; 1B) selon l'une des revendications 1 à 3.
